# EUROPÄISCHE PATENTSCHRIFT

(11) **EP 1 062 917 B1**
(45) Veröffentlichungstag und Bekanntmachung des Hinweises auf die Patenterteilung: **07.01.2009**
(21) Anmeldenummer: 00111397.6
(22) Anmeldetag: 26.05.2000
(51) Int. Cl.: A61C 13/15, A61C 19/00, A61C 1/00

(54) **Dentalgerät mit einer Anzeigegeeinheit**
Dental device with a display unit
Dispositif dentaire pourvu d'un moyen d'affichage

(30) Priorität: 23.06.1999 DE 19928805
(43) Veröffentlichungstag der Anmeldung: 27.12.2000
(73) Patentinhaber: Ivoclar Vivadent AG, 9494 Schaan (LI)
(72) Erfinder: Rohner, Gottfried, 9450 Altstätten (CH); Senn, Bruno, 9470 Buchs (CH)
(74) Vertreter: Baronetzky, Klaus

(56) Entgegenhaltungen:
- WO-A-99/09071
- DE-A- 19 636 266
- DE-A- 19 709 499
- DE-U- 8 007 265

## Beschreibung

Die Erfindung betrifft ein Dentalgerät gemäß dem Oberbegriff von Anspruch 1. Vorteilhafte Weitesbildurgen der Erfindung ergeben sich aus den Merkmalen der unteransprüche.

Derartige Dentalgeräte sind seit längerem bekannt. Dentalgeräte können für verschiedene Anwendungsfälle realisiert werden. Beispielsweise kann ein Dentalgerät als Mischgerät ausgebildet sein, oder beispielsweise als Brennofen. Regelmäßig erfolgt hier ein programmgesteuerter Ablauf, im einfachsten Fall, indem beispielsweise bei einem Mischgerät die zu mischenden Substanzen eingebracht und der Startknopf gedrückt wird, der den Mischvorgang einleitet. Es ist bekannt, den Betriebszustand derartiger Dentalgeräte über Anzeigeeinheiten zu signalisieren, die im einfachsten Fall als Betriebslampe ausgebildet sein können, aber auch komplexere Formen annehmen können.

Ein als Lichthärtgerät ausgebildetes Dentalgerät, bei welchem eine Anzeigeeinheit vorgesehen ist und mit einer Bedieneinrichtung das Dentalgerät gesteuert werden kann, ist beispielsweise aus der DE-GM 80 072 657 bekannt. Bei dieser Lösung dient die Anzeigeeinheit der numerischen Anzeige der abgespeicherten Werte eines Zeitzählers. Eine derartige Anzeige vermag den Zahnarzt oder Zahntechniker über den Härtungsfortschritt des Dentalgeräts informieren. Sie bietet jedoch keine weiteren Detailinformationen, was lediglich dann unkritisch ist, wenn der Zahntechniker oder Zahnarzt sich während des Härteablaufs auf den Härtvorgang konzentriert, und dementsprechend weiß, welche Restauration und mit welchem Programm er behandelt.

Aus der DE 196 36 266 A1 ist ein Dentalgerät mit einer Anzeigeeinheit bekannt, über welche die Bestrahlungsdauer und der Bestrahlungsmodus manuell eingegeben werden müssen. Die manuelle Eingabe kann bei Fehlbedienung jedoch zu Fehlern in der Dentalrestauration führen.

Ferner ist aus der US-A-5 049 069 eine Vorrichtung bekannt, bei welcher der Behandlungsabstand bei einer Zahnwurzelbehandlung angezeigt wird und über ein sich verlängerndes Anzeigefeld auf einer Anzeigeneinheit graphisch dargestellt wird. Diese Lösung erlaubt lediglich diese spezielle Anzeige.

Ferner ist bereits vorgeschlagen worden, ein Dentalgerät mit unterschiedlichen Programmen auszurüsten, die je nach Anwendungsfall unterschiedliche Lichthärtkurven bereitstellen. Lichthärtkurven können sich hinsichtlich des Verlaufs der Startkurve, hinsichlich der maximalen Lichtintensität, aber auch hinsichtlich der Frage unterscheiden, ob ein intermittierender oder Pulsbetrieb oder ein Dauerbetrieb vorgenommen wird, wobei beim intermittierenden Betrieb auch noch die Frequenz und Signalform der Lichtabgabe unterschiedlich sein kann.

Untersuchungen haben ergeben, daß je nach Anwendungsort unterschiedliche Lichthärtkurven günstig sind. Wenn beispielsweise Unterfüllungen oder kleine Füllungen polymerisiert werden sollen, besteht bei der Verwendung der Maximalleistung die Gefahr, daß es auf Grund der erhöhten Schrumpfkraft zur Randspaltenbildung kommt. Das bedeutet, daß bei Kleinfüllungen regelmäßig mit kleinerer Lichtleistung gearbeitet werden sollte, während bei dieser Lichtleistung die Aushärtung bei entsprechend großen Füllungen oder gar Kronen unzureichend wäre. Bei großen Füllungen, die zudem gegebenenfalls komplexe Formen annehmen können, hat es sich bewährt, auf den Pulsbetrieb zurückzugreifen.

Andererseits besteht die Gefahr, daß die Bedienperson für das Dentalgerät überfordert ist, wenn vor dem Härtvorgang erst Voruntersuchungen hinsichtlich der Härtaufgabe vorgenommen werden müssen, und dann ein gegebenenfalls lediglich numerisch spezifiziertes Programm angesteuert werden muß.

Bei der Bedienung besteht dann die Gefahr, daß der Zahnarzt oder Zahntechniker - gerade auch in der Hektik des Zahnklinik-Alltags - die Nummer des betreffenden Härtprogramms verwechselt und trotz der insofern genau vorliegenden und von der Theorie optimal angepaßten Spezifizierung eine falsche Härtung vornimmt, so daß es entweder zur Randspaltenbildung kommt oder die Füllung unvollständig ausgehärtet ist.

Daher liegt der Erfindung die Aufgabe zugrunde, ein Dentalgerät gemäß dem Oberbegriff von Anspruch 1 zu schaffen, das besser an den Alltag der Zahnklinik angepaßt ist und insbesondere besser zu bedienen ist.

Diese Aufgabe wird erfindungsgemäß durch Anspruch 1 gelöst. Vorteilhafte Weiterbildung ergeben sich aus den Unteransprüchen.

Die Erfindung wird hier anhand eines Lichthärtgeräts beschrieben, wobei es sich von selbst versteht, daß auch andere Dentalgeräte von der Erfindung umfasst werden sollen.

Erfindungsgemäß besonders günstig ist die optimale Zuordnung von Indikations ort und Bedienprogramm. Der bedienende Zahnarzt muß sich durch die erfindungsgemäß besonders ausgestaltete Anzeigeeinheit nicht um numerische Programme kümmern, sondern kann kurzerhand das entsprechende Behandlungssymbol anwählen, indem er einen Bedienknopf der Bedieneinrichtung so häufig betätigt, bis auf das entsprechende Bild oder Piktogramm umgeschaltet wird.

Besonders günstig läßt sich das erfindungsgemäße Lichthärtgerät mit der Anzeigeeinheit mittels der Flüssigkristalltechnik realisieren, indem nämlich verschiedene Felder eines zu restaurierenden Zahnes flächenhaft dargestellt werden, so daß beispielsweise ersichtlich ist, daß lichthärtende Unterfüllungen, lichthärtende Adhäsive, Kronen, Brücken, Inlays oder Composites gehärtet werden sollen, wobei je nach Wahl des entsprechenden Bedienfelds das zugehörige Programm angesteuert wird. Die entsprechenden Felder auf der Anzeigeeinheit sind bevorzugt in Form eines stilisierten Zahns ausgebildet, wobei es sich versteht, daß bei Bedarf zusätzliche, leicht verständliche Informationen eingebaut werden können. Bei der Verwendung einer Flüssigkristallanzeige kann hierzu abwechselnd das je betroffene Feld eingeschaltet und synchron mit der betreffenden Programm-Betriebsart aktiviert werden.

Besonders vorteilhaft ist es, daß die Bedienung erfindungsgemäß trotz einer Einknopfsteuerung interakiv erfolgen kann. Beispielsweise kann der Benutzer vor der Bedienung des Lichthärtgeräts durch Antippen des Bedienknopfes die möglichen Betriebsarten zyklisch sequentiell umschalten, wobei je die zugehörige Betriebsart und der entsprechende Indikation sort auf der Anzeigeeinheit in einer Weise angezeigt wird, die die Möglichkeit der Anwahl signalisiert, beispielsweise durch Blinken des entsprechenden Feldes.

Sobald die betreffende Betriebsart und der Indikation sort insofern vorbereitend aktiv ist, kann der Benutzer durch eine geeignete andere Betätigung, beispielsweise durch zweimaliges, kurzzeitig aufeinanderfolgendes Betätigen des Bedienknopfes, das sogenannte Doppelklicken, oder durch ein langes Drücken des Bedienknopfes den Polymerisationsvorgang starten. Auch dies wird durch eine entsprechende Anzeige deutlich gemacht, beispielsweise, indem ein entsprechendes Feld auf der Anzeigeeinheit zusätzlich aktiviert ist oder indem das Feld für den Indikationsort kontinuierlich angezeigt wird.

In einer modifizierten Ausführungsform ist es anstelledessen vorgesehen, daß die Vorwahl durch blinkende oder kontinuierliche Ansteuerung des betreffenden Restaurationsfeldes signalisiert wird, oder indem das betreffende Feld mit reduzierter Anzeigeintensität betrieben wird. Bei bestimmten Flüssigkristallanzeigen ist auch eine solche Betriebsart möglich. Bei modifizierten Ausführungsformen wird dann während des Betriebs des Dentalgeräts das betreffende Anzeigefeld mit maximaler Intensität betrieben.

Erfindungsgemäß besonders wesentlich ist die Umsetzung der Programminformation in die Ortsinformation, wobei das zugehörige Programm für das Dentalgerät insofern festgelegt ist und daher ein Benutzereingriff weder erforderlich noch erwünscht ist. Hierdurch ist die Bedienungssicherheit erheblich erhöht. Die Fehlerwahrscheinlichkeit bei der Bedienung ist zudem entsprechend reduziert.

Es versteht sich, daß bei Bedarf zusätzliche Felder in der Anzeigeeinheit ausgebildet werden können. Hierbei kommt insbesondere eine Balkenanzeige in Betracht, die die Intensität der Lichtabgabe der Lichtquelle in verständlicher Weise symbolisiert. Eine derartige Balkenanzeige eignet sich zudem als Indikator für die Aktivität, also für die Betriebszeit des Lichthärtgeräts. Ferner ist es auch möglich, mittels alphanumerischer Felder, die aufgrund des zur Vefügung stehenden Platzes bevorzugt für Abkürzungen geeignet sind, kurz die gewählte Betriebsart zu signalisieren. Beispielswiese können die Betriebsarten "Low power" , "Puls-Programm" sowie "High Power" mit "LOP" , "PUL" und "HIP" symbolisiert werden.

Weitere Vorteile, Einzelheiten und Merkmale ergeben sich aus der nachstehenden Beschreibung mehrerer Ausführungsbeispiele anhand der Zeichnungen.

Es zeigen:
- Fig. 1: eine Seitenansicht eines erfindungsgemäßen Lichthärtgeräts;
- Fig. 2: eine Ansicht einer Anzeigeeinheit für das Dentalgerät gemäß Fig. 1;
- Fig. 3: eine Ansicht der Anzeigeeinheit gemäß Fig. 2, wobei eine andere Betriebsart realisiert ist;
- Fig. 4: eine Ansicht der Anzeigeeinheit gemäß Fig. 2, wobei eine andere Betriebsart realisiert ist;
- Fig. 5: eine Ansicht der Anzeigeeinheit gemäß Fig. 2, wobei nacheinander verschiedene Zeitpunkte während des Lichthärtvorgangs dargestellt sind;
- Fig. 6: eine Ansicht der Anzeigeeinheit gemäß Fig. 3, wobei nacheinander verschiedene Zeitpunkte während des Lichthärtvorgangs dargestellt sind;
- Fig. 7: eine Ansicht der Anzeigeeinheit gemäß Fig. 4, wobei nacheinander verschiedene Zeitpunkte während des Lichthärtvorgangs dargestellt sind; und
- Fig. 8A, 8B und 8C: drei Darstellungen einer Anzeige für ein Mischgerät in symbolisierter Form;
- Fig. 9A, 9B und 9C: drei Darstellungen einer Anzeige für einen Brennofen in symbolisierter Form; und
- Fig. 10: eine schematische Darstellung einer weiteren Ausführungsform eines Dentalgeräts, nämlich eines Farbmeßgeräts, unter Darstellung der Anzeige in verschiedenen Stadien.

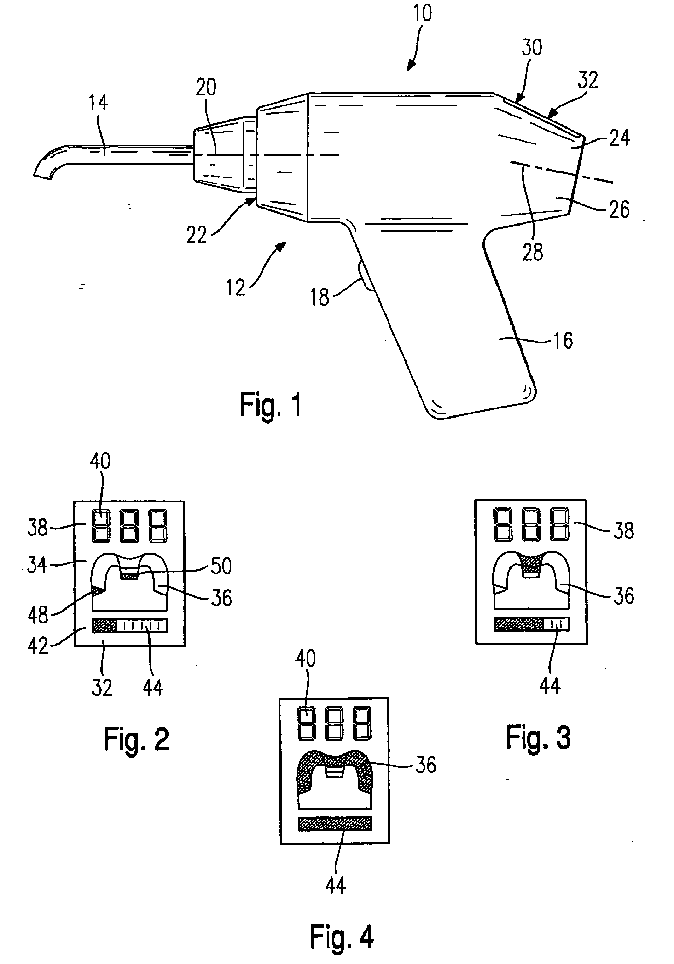

Das in Fig. 1 dargestellte Dentalgerät 10 weist ein Handgerät 12 auf, das entweder batteriebetrieben ist und dementsprechend über eine Ladestation mit Energie versorgt werden kann, während es nicht in Benutzung ist, oder über eine recht flexible Spannungsversorgungsleitung mit der Basisstation verbunden ist. Das Handgerät 12 ist im wesentlichen pistolenförmig ausgebildet, wobei der Lauf durch einen endseitig abgekröpften Lichtleiterstab 14 gebildet ist. Ein Handgriff 16 des Handgeräts 12 weist einen Betätigungsknopf 18 als Teil einer im übrigen nicht dargestellten Bedieneinrichtung auf. Mit der Bedieneinrichtung lassen sich verschiedene Programme nach Wahl des Benutzers einstellen und anwählen sowie auslösen.

Das Dentalgerät 10 weist eine leistungsstarke Halogenlampe auf, die einen Lichtaustritt entlang der optischen Achse 20 hat. Die optische Achse 20 verläuft parallel zum Lichtleiterstab 14 und im wesentlichen entsprechend der Gehäuseachse des oberen Teils des Handgeräts 14.

Nachdem die bekannten Halogenlampen neben Licht hoher Intensität auch Wärme abgeben, ist es sinnvoll und erforderlich, das Handgerät 12 mit einer Gebläsekühlung zu versehen. Dazu verlaufen Kühlkanäle durch den oberen Bereich des Handgeräts 12, und zwar von einem Lufteintritt 22 nach hinten. Die Kühlkanäle erstrecken sich möglichst nah um die Halogenlampe herum. Im rückwärtigen Bereich 24 ist ein Axialgebläse vorgesehen, und die Kühlluft tritt aus dem Handgerät 12 bei einem Luftaustritt 26 aus. Der Luftaustritt 26 verläuft erfindungsgemäß bevorzugt entlang einer Achse 28, die gegenüber der Achse 20 nach unten abgewinkelt ist. Durch diese Ausgestaltung läßt sich der besondere Vorteil erzielen, daß an einer schrägen Oberseite 30 des rückwärtigen Bereichs 24 Platz für die erfindungsgemäße Anzeigeeinheit 32 geschaffen wird, und gleichzeitig der austretende Luftstrom den Zahnarzt oder ggf. Zahntechniker nicht unmittelbar anbläst, sondern schräg nach unten verläuft. Die Anzeigeeinheit 32 liegt bei dieser Anordnung zugleich günstig im Blickfeld des Zahnarztes.

Es versteht sich, daß der Winkel zwischen den Achsen 20 und 28 in weiten Bereichen an die Erfordernisse angepaßt, aber auch die ästhetische Gestaltung des Dentalgeräts angepaßt werden kann. Der in der dargestellten Ausführungsform vorgesehene Winkel von 15° erlaubt es, Strömungsverluste, die hierauf zurückzuführen wären, praktisch vollständig zu vermeiden.

In dem dargestellten Ausführungsbeispiel weist die Oberseite 30 und damit die Ausrichtung der Anzeigeeinheit 32 einen Winkel von 25° nach hinten schräg abfallend zur optischen Achse 20 auf. Es versteht sich, daß auch dieser Winkel an die Erfordernisse anpaßbar ist, wobei auch berücksichtigt werden kann, daß bei Ausführung der Anzeigeeinheit 32 in Flüssigkristalltechnik die bekannten Flüssigkristallanzeigen auch so einstellbar sind, daß der maximale Kontrast bei einem Ablesewinkel vorliegt, der sich von 90° unterscheidet.

Es versteht sich, daß die erfindungsgemäße Anzeigeeinheit nicht auf die Flüssigkristalltechnik beschränkt ist. Beispielsweise kommt auch eine Plasmaanzeige, eine Leuchtdiodenanzeige oder eine beliebige andere geeignete Anzeigetechnik in Betracht, wobei bevorzugt eine Feldanordnung der einzelnen Anzeigefelder vorgegeben ist. Anzeigefelder können selbstverständlich auch matrixartig aus einzelnen Anzeigepunkten zusammengesetzt sein.

Die Anzeigeeinheit 32 ist bevorzugt etwas in die Oberseite 30 eingelassen, wie es schematisch in Fig. 1 dargestellt ist. Durch entsprechende, an sich bekannte Techniken läßt sich die Ablesbarkeit an die Erfordernisse anpassen, wobei zugleich durch die versenkte Anordnung ein besserer Schutz der Anzeigeeinheit auch bei eher rauher Behandlung des Handgeräts 12 gewährleistet ist.

Aus Fig. 2 sind die Anzeigefelder der Anzeigeeinheit in dem dargestellten Ausführungsbeispiel ersichtlich. Die Anzeigeeinheit 32 ist bevorzugt hoch-rechteckig mit einem Höhen/ Breiten-Verhältnis von etwa 3:2, so daß sie gut auf die Oberseite 30 paßt. Die Anzeigeeinheit 32 ist aus Gründen der preisgünstigen Herstellung flach, während die Oberseite 30 im übrigen abgerundet ist, um der im wesentlichen zylindrischen Form des oberen Teils des Handgeräts 12 zu folgen.

Die Anzeigeeinheit 32 weist bevorzugt 3 Bereiche auf. Ein mittlerer Bereich 34 stellt einen stilisierten Zahn 36 mit verschiedenen Einzel-Anzeigefeldern dar. Ein oberer Bereich 38 stellt eine dreistellige Sieben-Segment-Anzeige 40 dar. Ein unterer Bereich 42 stellt eine Balkenanzeige 44 dar.

Der stilisierte Zahn 36 weist verschiedene Felder auf. Die in Fig. 2 dunkel dargestellten Anzeigefelder symbolisieren Klasse 5 Zahnhalsfüllungen 48 sowie Unterfüllungen 50. In der in Fig. 2 indizierten Betriebsart sollen dementsprechend Unterfüllungen und/oder Klasse 5 Zahnhalsfüllungen gehärtet werden. Hierzu gehört die Sieben-Segment-Anzeige LOP, die auf low power, also eine geringe Energiestufe, hinweist.

Zusätzlich ist die Balkenanzeige im linken Bereich angesteuert und im rechten Bereich nicht angesteuert. Dies symbolisiert, daß lediglich ein geringer Teil der zur Verfügung stehenden Gesamtleistung bereitgestellt wird.

Die Anzeige gemäß Fig. 2 symbolisiert den Betriebszustand der Auswahl des Programms für die Lichthärtung von Unterfüllungen und Klasse 5 Zahnhalsfüllungen, also bevor das Programm tatsächlich abgerufen wird. Das eigentliche Abrufen des Programms erfolgt bei einer entsprechenden Betätigung der Bedieneinrichtung.

In dem hier dargestellten Ausführungsbeispiel ist es vorgesehen, daß die drei Programme LOP, PUL und HIP durch den kontinuierlichen Druck auf den Bedienknopf 18 sequentiell umschalten. Durch Loslassen des Bedienknopfes 18 wird das gewählte Programm aktiv. Das Umschalten erfolgt zyklisch, so daß sich an das Programm HIP erneut das Programm LOP anschließt.

Gemäß einer modifizierten Ausgestaltung ist es vorgesehen, daß der vorbereitende Wechsel zwischen den Betriebsarten über ein einmaliges Betätigen und Loslassen des Betätigungsknopfs 18 erfolgt, und daß das Einschalten des je gewählten Programms über ein länger dauerndes Betätigen des Betätigungsknopfes erfolgt, beispielsweise über einen Zeitraum von mehr als einer Sekunde.

Aus Fig. 3 ist ersichtlich, in welcher Weise die Felder des stilisierten Zahns 36 bei der pulsierenden Betriebsart angesteuert werden. Bei dieser Betriebsart ist das Feld für große Füllungen aktiv, wobei die Aktivierung einhergeht mit der Eignung der pulsierenden Betriebsart besonders für große Füllungen. Die Balkenanzeige 44 ist in einem mittleren Bereich ausgesteuert, um insofern die in der zeitlichen Integration abgegebene mittlere Leistung zu signalisieren. Alternativ kann auch eine in ihrer Aussteuerung wechselnde Balkenanzeige die pulsierende Betriebsart symbolisieren. Der obere Bereich 38 zeigt die Buchstaben PUL an, die ebenfalls auf die betreffende Betriebsart hinweisen.

Fig. 4 zeigt im Bereich des stilisierten Zahns 36 ein Aktivierungsfeld für die Zementierung von großen Kronen an, während die Balkenanzeige 44 voll ausgesteuert dargestellt ist. Die Sieben-Segment-Anzeige 40 zeigt HIP, was auf high power, also große Leistung, hinweisen soll.

Aus dem Vergleich der Figuren 3 und 4 ergibt sich, daß bei der Betriebsart gemäß Fig. 4 in der Betriebsart gemäß Fig. 3 bzw.
Fig. 2 ausgesteuerte Felder des mittleren Bereichs 34 ebenfalls angesteuert sind. Wesentlich ist, daß der Zahnarzt, oder ggf. der Zahntechniker, auf dem dargestellten stilisierten Zahn sofort die Eignung der betreffenden Betriebsart für die Lichthärtaufgabe erkennt.

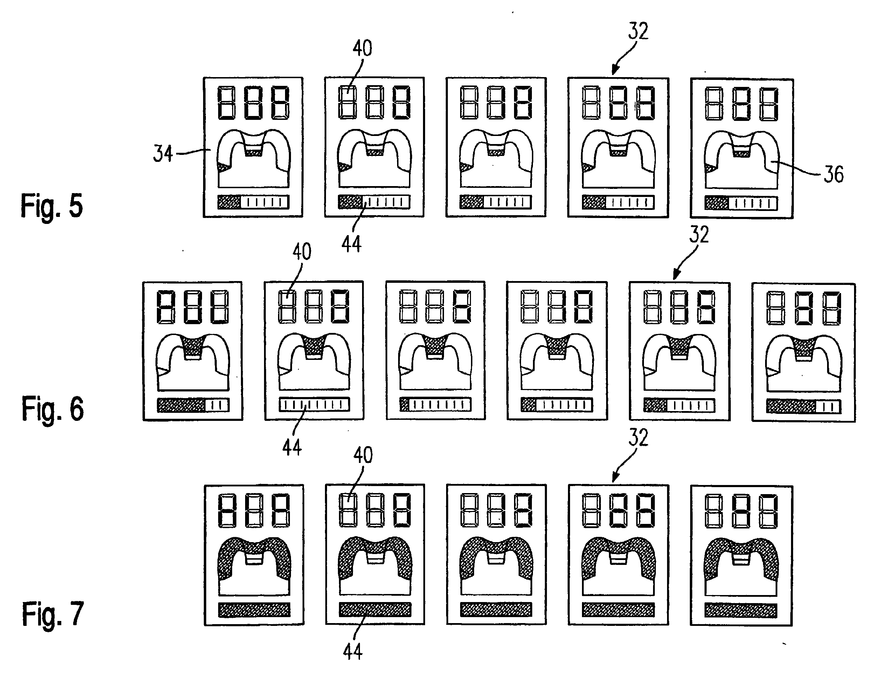

Die Figuren 6 und 7 zeigen je den Ablauf der jeweiligen Betriebsarten in der zeitlichen Abfolge. Fig. 5 zeigt die Anzeigeeinheit 32 zu fünf verschiedenen Zeitpunkten und die Darstellung ganz links zeigt die Vorbereitung der betreffenden Betriebsart, entsprechend Fig. 2. Die zweite Darstellung von links zeigt den Zeitpunkt unmittelbar nach Einschalten des Programms LOP. Die Sieben-Segment-Anzeige 40 ändert sich von LOP in 0, was darauf hinweist, daß bisher 0 Sekunden des Lichthärtzeitraums verstrichen sind. Die Balkenanzeige 44 verbleibt bei dem Ausgangszustand, was ebenso für den mittleren Bereich 34 mit dem stilisierten Zahn 36 gilt.

Während des Lichthärtvorgangs ändert sich lediglich die Sieben-Segment-Anzeige 40 über die je dargestellten Sekunden 18, 23 und 37, während sie beim Ende des Lichthärtvorgangs erlischt, um dem Zahnarzt den vollständigen Abschluß des Lichthärtvorgangs zu signalisieren.

In entsprechender Weise ist der Lichthärtvorgang für den Pulsbetrieb gemäß Fig. 6 signalisiert. Auch hier entspricht die Darstellung am weitesten links Fig. 3, und die zweite Darstellung von links dem Zustand beim Auslösen des Betätigungsknopfs 18 für die betreffende Betriebsart. Die Balkenanzeige 44 ist jedoch bei dieser Betriebsart zunächst sehr klein, entsprechend der Intensität der Lichtabgabe. Die Pulsintensität nimmt bei dem Programm PUL über den Lichthärtzeitraum zu, was in den unterschiedlichen Zeitpunkten 5 Sekunden, 10 Sekunden, 15 Sekunden und 37 Sekunden in Fig. 6 entsprechend dargestellt ist.

Es versteht sich, daß hier auch eine entsprechende pulsierende Balkenanzeige vorgesehen sein kann, um das Pulsprogramm auch während der Lichthärtvorgangs deutlich zu machen, wobei die heutigen Flüssigkristallanzeigen eine Anzeigefrequenz von etwas unter 1 Sekunde erlauben.

In Fig. 7 ist in analoger Weise der Lichthärtvorgang für die Programmwahl HIP gemäß Fig. 4 dargestellt. Auch hier zeigt die Darstellung ganz links die Anwahl der Anzeigevorrichtung 32 zum Zeitpunkt, bevor das Lichthärtprogramm ausgelöst wird. Die zweite Darstellung zeigt die Anzeigeeinheit 32 unmittelbar beim Start durch den Betätigungsknopf 18, wobei die Balkenanzeige 44 vollständig ausgesteuert ist und die Sieben-Segment-Anzeige 40 auf 0 steht. Das Programm HIP dauert 47 Sekunden, so daß die Darstellung ganz rechts die Zeit 47 auf der Sieben-Segment-Anzeige 40 zeigt. Es versteht sich, daß die hier vorgesehenen Anzeigebilder lediglich beispielhaft zu verstehen sind und nach Belieben und bei Bedarf an die Erfordernisse angepaßt werden können.

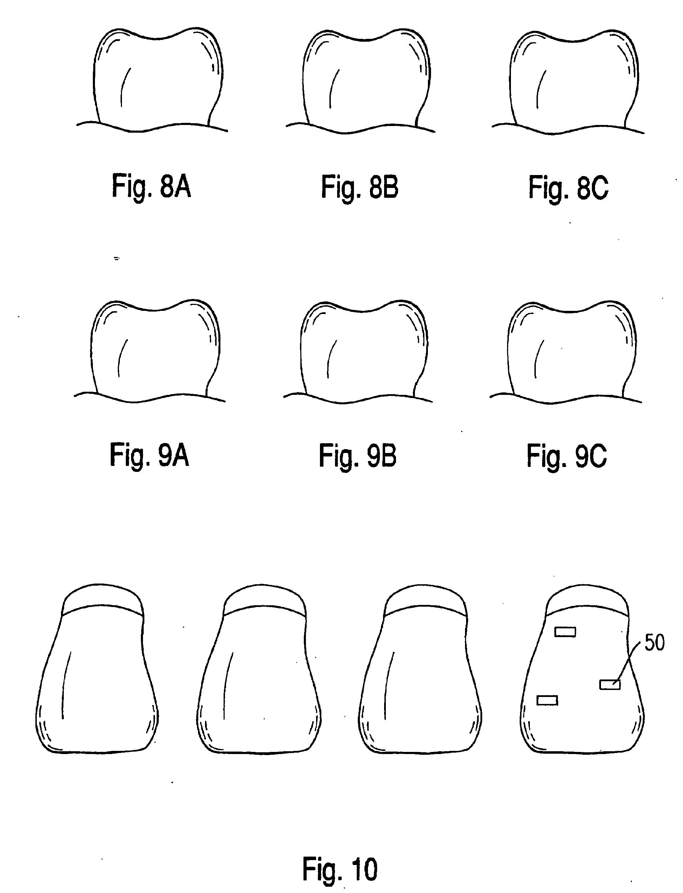

Aus Fig. 8A bis 8C ist eine weitere Ausgestaltung eines erfindungsgemäßen Dentalgeräts ersichtlich. Es ist ein Mischgerät vorgesehen, das eine Anzeige in Form eines Zahns aufweist, so daß bereits optisch deutlich gemacht wird, wie die Zweckbestimmung hier sein soll. Die Anzeige wird mit entsprechenden Anzeigefeldern umgeschaltet, wobei die Buchstaben A, C und F darstellbar sind, was auf die Verwendung von Amalgam in dem Mischgerät, von Composit und die Verwendung für eine Mischspritze hindeutet.

Fig. 9A bis 9C zeigt eine Anzeigeeinheit für einen Brennofen als weitere Ausführungsform eines Dentalgeräts, wobei auch hier wiederum ein Zahnschema symbolisiert dargestellt ist. Verschiedene Betriebszustände bzw. Leistungsstufen des Brennofens lassen sich durch entsprechend symbolisierte Anzeigeinhalte darstellen, wobei P für die Programmwahl steht, K für das Brennen einer Krone und B für das Brennen einer Brücke.

Aus Fig. 10 ist ein Farbmeßgerät als Dentalgerät ersichtlich, wobei lediglich die betreffende Anzeigeeinheit schematisch dargestellt ist. Hier sind vier unterschiedliche Anzeigeinhalte vorgesehen, nämlich S für Selektion oder Zahnauswahl, M für Materialauswahl, C für Farbbestimmung grob sowie ein Schema mit einzelnen Anzeigefeldern 50 auf dem symbolisierten Zahnfeld, die auf Farbbestimmung fein hindeuten.

Es versteht sich, daß entsprechende erfindungsgemäße Anzeigeeinheiten auch in Verbindung mit anderen Dentaleinheiten realisierbar sind. So kann beispielsweise ein Keramikpreßofen, ein Aufwärmofen, ein Dosiergerät, ein Computerprogramm für ein Dentalgerät, ein Tiefziehgerät, ein Kopierfräsgerät, ein Druckpolymerisationsgerät und weitere Geräte entsprechende Anzeigeeinheiten aufweisen.

## Patentansprüche

1. Dentalgerät mit einer Anzeigeeinheit, und mit einer Bedieneinrichtung, über welche mindestens zwei Programme für das Dentalgerät einstellbar und auslösbar sind, wobei die Anzeigeeinheit (32) mindestens ein Zahnschema aufweist, das mehrere Felder aufweist, die Indikationsorte darstellen, und wobei die Anzeigeeinheit (32) Zusatzfelder (40) aufweist
**dadurch gekennzeichnet, dass** die Zusatzfelder (40) die als Programminformation angegebenen Betriebsarten des Dentalgeräts (10) signalisieren, wobei je die zugehörige Betriebsart und der entsprechende Indikationsort auf der Anzeigeeinheit (32) sichtbar und sequentiell umschaltbar sind.

2. Dentalgerät nach Anspruch 1,
**dadurch gekennzeichnet, dass** die betreffende Betriebsart und der Indikationsort vorbereitend vor der Behandlung aktivierbar sind.

3. Dentalgerät nach einem der Ansprüche 1 oder 2,
**dadurch gekennzeichnet, dass** das Zahnschema in mehrere Felder unterteilt ist.

4. Dentalgerät nach Anspruch 1,
**dadurch gekennzeichnet, dass** die Zusatzfelder (40) die Betriebsart des Dentalgeräts (10) in Form einer verständlichen Abkürzung signalisieren.

5. Dentalgerät nach einem der vorhergehenden Ansprüche,
**dadurch gekennzeichnet, dass** die Felder über mehrere Zähne verteilt sind und insbesondere jeder Zahn des Zahnschemas einem Feld entspricht.

6. Dentalgerät nach einem der Ansprüche 1 bis 4,
**dadurch gekennzeichnet, dass** die Felder in dem Zahnschema je dem Ort des Zahns entsprechen, für welchen das betreffende Programm geeignet ist.

7. Dentalgerät nach einem der vorhergehenden Ansprüche,
**dadurch gekennzeichnet, dass** die Felder in dem Zahnschema als Indikationsorte ausgebildet sind.

8. Dentalgerät nach einem der vorhergehenden Ansprüche,
**dadurch gekennzeichnet, dass** die Zusatzfelder (40) für die Anzeige der Betriebsart mehrfach benutzbar sind, insbesondere auch zur Anzeige der Betriebszeit.

9. Dentalgerät nach einem der vorhergehenden Ansprüche,
**dadurch gekennzeichnet, dass** das Dentalgerät (10) mit einer Einknopfbedienung (18) ausgerüstet ist, mit welcher über ein sequentielles Betätigen des Schaltknopfes die cher über ein sequentielles Betätigen des Schaltknopfes die unterschiedlichen Betriebsarten, je durch die Zusatzfelder (40) symbolisiert, umschaltbar sind.

10. Dentalgerät nach einem der vorhergehenden Ansprüche,
**dadurch gekennzeichnet, dass** die Bedieneinrichtung sequentiell die unterschiedlichen Betriebsarten und Indikationsorte anbietet und dies auf der Anzeigeeinheit (32) anzeigt, und dass die Einschaltung des Dentalgeräts (10) ebenfalls über die Bedieneinrichtung erfolgt.

11. Dentalgerät nach einem der vorhergehenden Ansprüche,
**dadurch gekennzeichnet, dass** das Dentalgerät als Lichthärtgerät ausgebildet ist, das insbesondere ein Handgerät aufweist und dass die Programme den Lichthärtvorgang betreffen.

12. Dentalgerät nach Anspruch 11,
**dadurch gekennzeichnet, dass** über das Programm ein Feld des Zahnschemas aktivierbar ist, das einer Indikation entspricht, für die das betreffende Programm geeignet ist.

13. Dentalgerät nach einem der Ansprüche 11 oder 12,
**dadurch gekennzeichnet, dass** weitere Zusatzfelder (40), insbesondere numerische Felder, für die Anzeige der Härtzeit und/oder der verbleibenden Härtzeit vorgesehen sind.

14. Dentalgerät nach einem der Ansprüche 11 bis 13,
**dadurch gekennzeichnet, dass** mindestens ein Anzeigefeld (44) für die Lichtintensität an der Anzeigeeinheit (32) vorgesehen ist, das insbesondere als Balkenanzeige (44) ausgebildet ist.

15. Dentalgerät nach einem der Ansprüche 11 bis 14,
**dadurch gekennzeichnet, dass** die Anzeigeeinheit (32) auf einer rückwärtigen Schrägfläche (30) des Handgeräts (12) angeordnet und bei der Behandlung im Blickfeld des Zahnarztes ist.

16. Dentalgerät nach einem der Ansprüche 11 bis 15,
**dadurch gekennzeichnet, dass** die Betriebsart Pulsbetrieb durch ein getaktet angesteuertes Anzeigefeld signalisiert ist.

## Claims

1. A dental apparatus comprising a display and further comprising an actuating device, with the aid of which at least two operating programs for said dental apparatus can be set and activated, said display (32) comprising at least a tooth schematic having several fields that represent indicator locations, and said display (32) further comprising auxiliary fields (40), wherein the auxiliary fields (40) indicate the operational modes of the dental apparatus (10) stated in the form of program information, each of the corresponding operational modes and the corresponding indicator location being visible on the display (32) and being able to be switched over in a sequential manner.

2. A dental apparatus according to claim 1, wherein the pertaining operational mode and the indicator location can be pre-paratorily activated before the treatment.

3. A dental apparatus according to one of the claims 1 or 2, wherein the tooth schematic is divided into several fields.

4. A dental apparatus according to claim 1, wherein the auxiliary fields (40) indicate the operational mode of the dental apparatus (10) in the form of a comprehensible abbreviation.

5. A dental apparatus according to one of the preceding claims, wherein said indicator fields are distributed over a plurality of teeth and wherein each of said teeth of the tooth schematic in particular corresponds to one field.

6. A dental apparatus according to one of the claims 1 to 4, wherein the fields in the tooth schematic each match the location of the tooth, for which the pertaining program is suitable.

7. A dental apparatus according to one of the preceding claims, wherein the fields in the tooth schematic are embodied as indicator locations.

8. A dental apparatus according to one of the preceding claims, wherein the auxiliary fields (40) can be used several times for displaying the operational mode, in particular for also displaying the operating time.

9. A dental apparatus according to one of the preceding claims, wherein the dental apparatus (10) is provided with a single-button control (18), with the aid of which the different operational modes that are each indicated by the auxiliary fields (40), can be switched over by sequentially actuating the control button.

10. A dental apparatus according to one of the preceding claims, wherein the operating device sequentially offers and displays the different operational modes and indicator locations on the display (32), and wherein the activation of the dental apparatus (10) is also effected by the the operating device.

11. A dental apparatus according to one of the preceding claims, wherein the dental apparatus is embodied as a light-curing device that in particular comprises a hand-held device, and wherein the programs relate to the light-curing operation.

12. A dental apparatus according to claim 11, wherein a field of the tooth schematic can be activated by means of the program, said field matching an indication for which the pertaining program is suitable.

13. A dental apparatus according to claim 11 or 12, wherein further auxiliary fields (40), in particular numerical fields, are provided for displaying the curing time and/or the remaining curing time.

14. A dental apparatus according to one of the claims 11 to 13, wherein the display (32) provides at least one display field (44) for displaying the light intensity, said display field in particular being embodied as a bar indicator (44).

15. A dental apparatus according to one of the claims 11 to 14, wherein the display (32) is arranged on a rearward inclined surface (30) of the hand-held device (12) and is positioned within the field of view of the dentist during the treatment.

16. A dental apparatus according to one of the claims 11 to 15, wherein a pulsed operational mode is signaled by a clock-controlled display field.

## Revendications

1. Dispositif dentaire pourvu d'un moyen d'affichage, et d'un dispositif de commande, via lesquels au moins deux programmes pour le dispositif dentaire peuvent être lancés et réglés, le moyen d'affichage (32) comprenant au moins un schéma dentaire qui comprend plusieurs champs, qui représentent des emplacements indiqués, et le moyen d'affichage (32) comprenant des champs supplémentaires (40), **caractérisé en ce que** les champs supplémentaires (40) signalisent les modes d'exploitation du dispositif dentaire (10) indiqués comme une information de programme, chaque mode d'exploitation correspondant et emplacement indiqué correspondant pouvant être visualisés et commutés de façon séquentielle sur le moyen d'affichage (32).

2. Dispositif dentaire selon la revendication 1, **caractérisé en ce que** le mode d'exploitation en question et l'emplacement indiqué peuvent être activés de façon préalable au traitement.

3. Dispositif dentaire selon l'une quelconque des revendications 1 ou 2,
**caractérisé en ce que** le schéma dentaire est subdivisé en plusieurs champs.

4. Dispositif dentaire selon la revendication 1,
**caractérisé en ce que** les champs supplémentaires (40) signalisent le mode d'exploitation du dispositif dentaire (10) sous la forme d'une abréviation compréhensible.

5. Dispositif dentaire selon l'une quelconque des revendications précédentes,
**caractérisé en ce que** les champs sont répartis sur plusieurs dents et, en particulier, **en ce que** chaque dent du schéma dentaire correspond à un champ.

6. Dispositif dentaire selon l'une quelconque des revendications 1 à 4,
**caractérisé en ce que** les champs dans le schéma dentaire correspondent chacun à l'emplacement de la dent, pour lequel le programme en question est approprié.

7. Dispositif dentaire selon l'une quelconque des revendications précédentes,
**caractérisé en ce que** les champs sont conçus dans le schéma dentaire comme des emplacements indiqués.

8. Dispositif dentaire selon l'une quelconque des revendications précédentes,
**caractérisé en ce que** les champs supplémentaires (40) sont utilisables plusieurs fois pour l'affichage du mode d'exploitation, en particulier également pour l'affichage de la période d'exploitation.

9. Dispositif dentaire selon l'une quelconque des revendications précédentes,
**caractérisé en ce que** le dispositif dentaire (10) est équipé d'une commande à un bouton (18), qui permet de commuter, via un actionnement séquentiel du bouton de commande, les différents modes d'exploitation, symbolisés chacun par les champs supplémentaires (40).

10. Dispositif dentaire selon l'une quelconque des revendications précédentes,
**caractérisé en ce \que** le dispositif de commande présente de façon séquentielle les différents modes d'exploitation et les emplacements indiqués qui sont affichés sur le moyen d'affichage (32), et en ce que l'activation du dispositif dentaire (10) s'effectue également via le dispositif de commande.

11. Dispositif dentaire selon l'une quelconque des revendications précédentes,
**caractérisé en ce que** le dispositif dentaire est conçu comme un appareil de photopolymérisation qui comprend en particulier un terminal portatif et **en ce que** les programmes concernent le processus de photopolymérisation.

12. Dispositif dentaire selon la revendication 11,
**caractérisé en ce que** le programme peut activer un champ du schéma dentaire qui correspond à une indication pour laquelle le programme en question est approprié.

13. Dispositif dentaire selon l'une des revendications 11 ou 12,
**caractérisé en ce que** d'autres champs supplémentaires (40), en particulier des champs numériques, sont prévus pour l'affichage du temps de polymérisation et/ou du temps de polymérisation restant.

14. Dispositif dentaire selon l'une des revendications 11 à 13,
**caractérisé en ce qu'**au moins un champ d'affichage (44) est prévu pour l'intensité lumineuse sur le moyen d'affichage (32) qui est conçu en particulier sous forme d'indicateur à barres graphes (44).

15. Dispositif dentaire selon l'une des revendications 11 à 14,
**caractérisé en ce que** le moyen d'affichage (32) est disposé sur une surface inclinée (30) sur le côté arrière du terminal portatif (12) et se trouve dans le champ visuel du dentiste lors du traitement.

16. Dispositif dentaire selon l'une des revendications 11 à 15,
**caractérisé en ce que** le mode d'exploitation en mode pulsé est signalisé par un champ d'affichage commandé par impulsions.
